# EUROPEAN PATENT SPECIFICATION

(11) **EP 2 837 568 B1**
(45) Date of publication and mention of the grant of the patent: **22.03.2017**
(21) Application number: 14180056.5
(22) Date of filing: 06.08.2014
(51) Int. Cl.: B64G 1/44, B64G 1/64, B64G 1/22

(54) **Spacecraft and adapter structure therefore**
Raumfahrzeug und Adapterstruktur dafür
véhicule spatial et structure adaptée pour ledit

(30) Priority: 14.08.2013 NL 2011304
(43) Date of publication of application: 18.02.2015
(73) Proprietor: Airbus Defence and Space Netherlands B.V., 2333 CS Leiden (NL)
(72) Inventor: de Kam, Jaap, 1183 GS Amstelveen (NL); Cruijssen, Johan Hendrik, 2406 JM Alphen aan den Rijn (NL)
(74) Representative: Nederlandsch Octrooibureau

(56) References cited:
- EP-A2- 1 104 743
- WO-A1-86/01484
- WO-A1-92/00223
- US-A- 5 884 866
- "FIVE IN ONE", AEROSPACE AMERICA, AMERICAN INSTITUTE OF AERONAUTICS & ASTRONAUTICS. NEW YORK, US, vol. 35, no. 6, 1 June 1997 (1997-06-01), page 43, XP000691077, ISSN: 0740-722X

## Description

The invention relates to a spacecraft, comprising a carrier rocket having a narrowing top, a closed cargo space on the carrier rocket, a main effective payload and an adapter structure which is connected to the narrowing top of the carrier rocket and on which adapter structure the main effective payload is releasably supported, which main payload and adapter structure are situated in the cargo space, wherein the adapter structure comprises at least an assembly of a connecting body and a carrier body with a subsidiary effective payload, which subsidiary effective payload or multiple small subsidiary effective payloads have a total mass which is about 1 or 2 orders of magnitude smaller than the total mass of the main effective payload.

Such a spacecraft is known from EP-A-1492706. A conical adapter structure consisting of two stacked halves is arranged between the carrier rocket and the effective payload thereof. The adapter structure ensures that loads are transmitted between the carrier rocket and the payload, which loads are considerable, particularly during launch. The upper half of the adapter structure is connected to the main payload by means of a releasable coupling, the lower half may be connected to the carrier rocket by a further coupling. A subsidiary payload or multiple subsidiary payloads may be accommodated in the lower half in order to use the capacity of the carrier rocket to the greatest possible extent. This subsidiary payload may, for example, consist of a lightweight, secondary satellite. It is also possible for the lower half itself to be configured as a component of such a secondary satellite.

Although such an adapter structure does indeed lead to an improved use of the capacity of the carrier rocket, there are nevertheless also a number of drawbacks associated with it. The main drawback is the fact that the space inside the adapter structure is limited. As a result thereof, the dimension of the subsidiary payload to be transported is also limited. A related drawback is the fact that the height of the adapter structure is largely fixed and thus can only be modified to a very limited extent.

Another adapter structure is known from US 5 884 866, which is considered being the closet prior art and discloses the preamble of independent claim 1.

It is therefore an object of the invention to improve a spacecraft of the abovementioned type in such a way that it becomes more flexible with regard to its capacity of transporting a subsidiary effective payload. This object is achieved by the fact that each connecting body has an upper end which is connected to the main payload or to a connecting body of a further, upper assembly by means of an upper coupling, and has a lower end which is connected to the narrowing top of the carrier rocket or to a connecting body of a further, lower assembly by means of a lower coupling, that a carrier body is connected to the associated connecting body at a position between said ends of this connecting body and that this carrier body and the subsidiary payload which is supported thereby are situated externally with respect to this connecting body in the cargo space and in that the adapter structure is connected to the narrowing top of the carrier rocket by means of a releasable coupling.

This is achieved with an adapter structure for a spacecraft according to claim 1.

With the spacecraft according to the invention, the loads are transmitted via the connecting body which is of a robust configuration suitable for the purpose. The carrier body does not, however, participate in transmitting the loads, and is configured to support the relatively lightweight subsidiary payload. This means that the carrier body can also be made relatively lightweight. It is furthermore important that the carrier body is situated outside the connecting body, so that the area available inside the cargo space can be used more efficiently. A relatively large space is available for the subsidiary payload. The subsidiary payload may consist of multiple parts, only limited by the internal contour of the cargo space and of the main payload present therein.

The carrier body is permanently connected to the connecting body, so that the assembly forms a permanent unit. Incidentally, it should be pointed out that the structure of the carrier rocket itself often consists of structural parts which are permanently connected to each other. Thus, for example, the narrowing top of the carrier rocket may consist of one or several rings which are permanently connected to each other. The adapter structure comprising at least an assembly of a connecting body and a carrier body should be distinguished from said structure of the carrier rocket, and is permanently or releasably fitted to said structure.

As has already been mentioned, the main payload can be separated from the adapter structure by activating the releasable coupling between the two. Furthermore, the subsidiary effective payload may also be connected to the carrier body by means of a releasable coupling, so that this may also be released. In that case, the carrier body may be permanently connected to the carrier rocket. Further it is possible to connect the adapter structure to the narrowing top of the carrier rocket by means of a releasable coupling. In that case, the carrier body may continue to form a single entity with the subsidiary payload, and serve, for example, as a platform to which various components, such as propulsion and control electronics for the subsidiary payload, are attached. This has the additional advantage that the creation of space debris is limited. As an alternative, it is also possible to separate the subsidiary load form the carrier body.

The carrier body may be configured in any suitable way. As already mentioned above, the contour of the cargo space and of the main payload play a part. According to a first possibility, the carrier body may extend transversely to the axis of the carrier rocket, preferably at right angles to said axis. The platform which is thus formed is eminently suitable for supporting components of the subsidiary payload. In order to produce a carrier body of the desired strength and stiffness, a stiffening element may be provided, such as a stiffening plate, which extends parallel to the longitudinal direction of the carrier rocket and is connected to the carrier body and the connecting body. According to an alternative embodiment, the carrier body may extend parallel to the axis of the carrier rocket.

The adapter structure may also consist of a single assembly of a connecting body and a carrier body. However, it is also possible to use several assemblies in the adapter structure. Since the connecting body forms the load-transmitting component, connecting these to each other in series is an excellent way of stacking such assemblies while maintaining the load-bearing capability of the adapter structure. Each connecting body may be provided with a carrier body, depending on the amount of space available. These assemblies may be coupled to each other permanently in order to provide a relatively large auxiliary structure. Alternatively, however, it is also possible to connect the connecting bodies to each other by means of a releasable coupling. Such releasably connected assemblies can then be used to produce the same number of auxiliary satellites. Combinations of permanently and releasably connected assemblies are also possible.

The shape of the connecting body may be, for example, cylindrical. In this case, a simple stackability of various assemblies may be achieved. However, other shapes are also possible, such as a square shape or a conical shape. Preferably, the releasable coupling is configured to be; a so-called Marmon coupling is often used. The releasable coupling may furthermore comprise a shock absorber.

The main payload and the adapter structure may each comprise a circular engagement element, which engagement elements form part of the upper coupling between the main payload and the adapter structure. However, other shapes are also possible, such as a square shape.

In the foregoing, it has already been mentioned that the mass of the main payload differs substantially from the mass of the subsidiary load. As an example, an embodiment is mentioned wherein the mass of the main payload is at least an order of magnitude larger than the total mass of the subsidiary payload, Preferably, each dimension of the main load is at least an order of magnitude larger than each dimension of the subsidiary load. The expression "an order of magnitude larger" is intended to indicate a difference between two quantities one quantity of which is in the order of 10 times larger than the other quantity; two orders of magnitude refers to a factor 100. The main payload may have a mass of several tons, such as 3-6 tons and with a dimension of several meters, such as 2-3 m perpendicular to the axis and 3-8 m in height direction. In contrast, in the case of the subsidiary payload masses of several tens kg, with a maximum of 50 kg play a role. The dimensions of the subsidiary payload and parts thereof are in the range of several dm, such as 2-4 dm.

The cargo space is surrounded by a surrounding shroud; preferably the connecting body has a maximum dimension transverse with respect to the longitudinal direction of the carrier rocket ranging between 20% and 50% of the internal dimension of the shroud transverse with respect to the longitudinal direction of the carrier rocket.

Reference is made to the state of the art as disclosed in US-A-5884866. This publication discloses a spacecraft the several payload components are more or less equal to each other; no distinction can be made between a heavy main payload and much lighter subsidiary payloads. These payloads are connected to a column which is an order of magnitude smaller than the transverse dimensions of the cargo space. Such a column is not fit for supporting a single and thus much heavier main payload.

Possibly, in the spacecraft according to the invention two relatively heavy and voluminous main payloads may be stacked on top of each other through a cage construction. The upper main payload is connected to the cage construction by means of a releasable coupling.

In the foregoing, reference is made to a subsidiary payload, which also covers multiple small subsidiary payloads which together constitute the subsidiary payload.

The invention will now be explained in more detail with reference to the exemplary embodiments illustrated in the figures, in which:
Fig. 1 shows a perspective view of a part of a carrier rocket with an adapter structure.

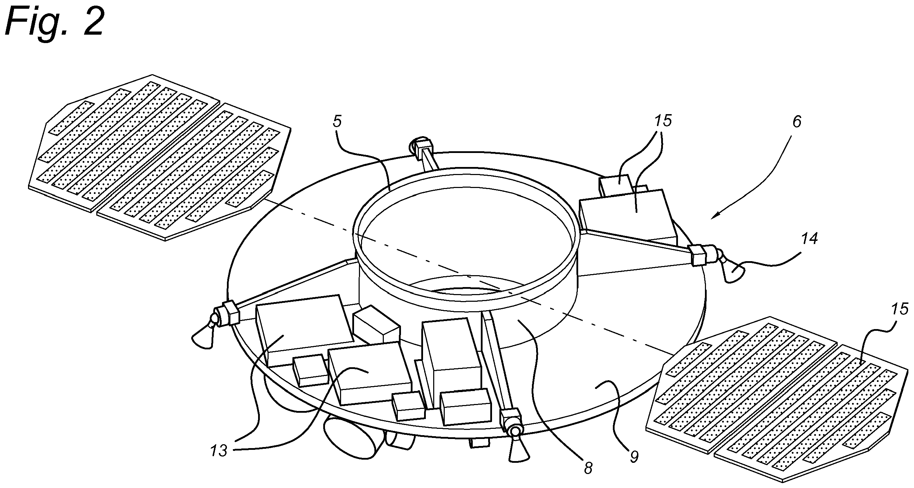

Fig. 2 shows a perspective view of an embodiment of the adapter structure.
Fig. 3 shows a side view of the carrier rocket with an adapter structure and main payload.
Fig. 4 shows a side view of a further embodiment of the adapter structure.
Fig. 5 shows a top view of the adapter structure from Fig. 4.
Fig. 6 shows an adapter structure with stacked assemblies.

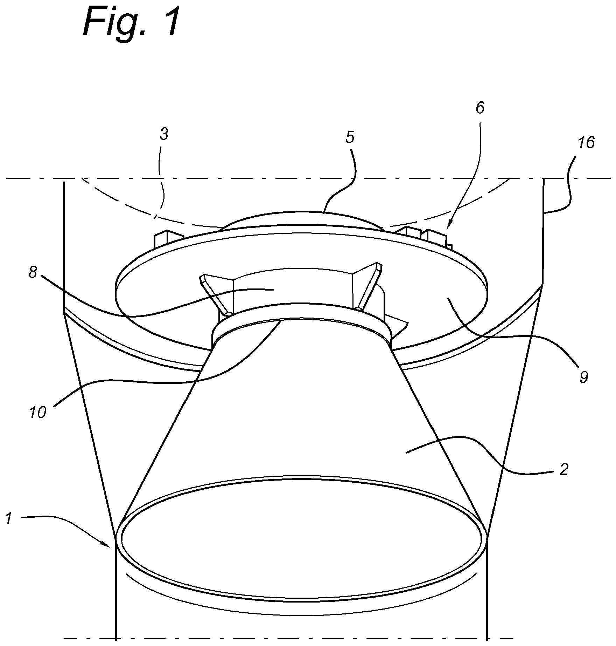

Fig. 1 shows, in a partly cut-away view, an arrangement consisting of a carrier rocket 1 in which a cargo space 3 is delimited within a casing or shroud 16 which is known per se. The conical top 2 of the carrier rocket 1 protrudes into this cargo space 3. An adapter structure 6 is fitted to the conical top 2 of the carrier rocket 1 and in turn supports the main effective payload 4 in the cargo space 3. The adapter structure is fixed to the conical top 2 by means of the lower coupling 10. The main payload 4 is secured by means of the releasable upper coupling 5, in such a way that the main payload can be separated from the carrier rocket 1 after launch.

If the lower coupling 5 is also configured to be a releasable coupling, it is also possible to separate the entire adapter structure 6 with the subsidiary payload or multiple small subsidiary payloads 13 attached thereto from the carrier rocket 1 after launch. In this case, a free auxiliary satellite is obtained which can be controlled in the desired manner by means of the propulsion 14. The solar panels 15 which are fitted to the adapter structure 6 can be folded out in order to provide power to the subsidiary payload 13. However, it is also possible to permanently connect the adapter structure to the carrier rocket 1, in which case the subsidiary payload has to be releasably coupled to the carrier body 9.

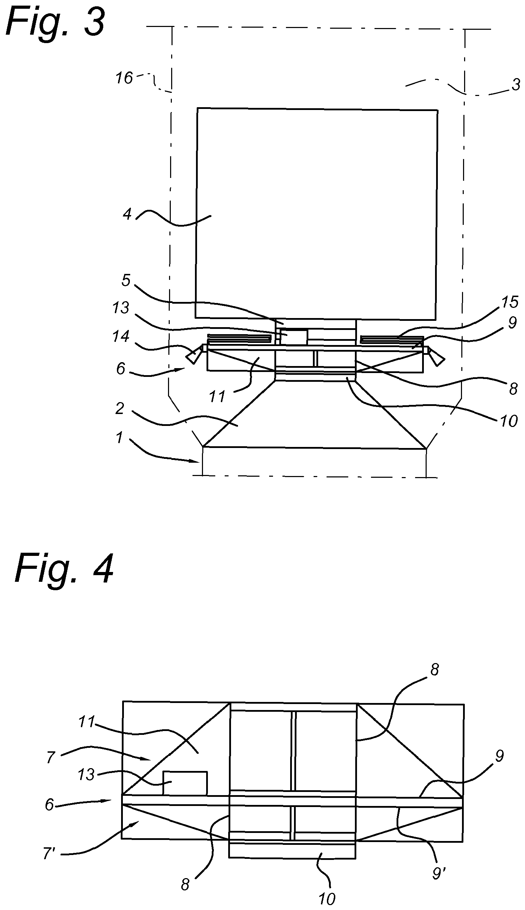

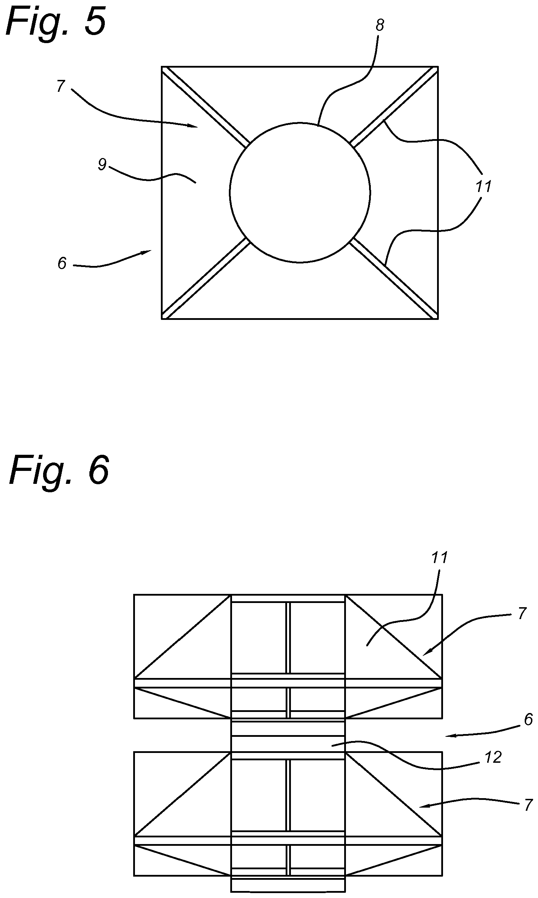

In the side view of Fig. 3, this arrangement is shown in more detail. Here, it can also be seen that the adapter structure has stiffening elements in the form of plates 11 which extend in a radial plane, as is illustrated further in the top view in Fig. 5.

In the variant from Fig. 4, the adapter structure 6 is provided with the above-described primary assembly 7 of connecting body 8 and carrier body 9. A second, secondary assembly 7' comprising a second connecting body 8' and a second carrier body 9' is attached to the underside of the carrier body. These two assemblies are permanently attached to each other and carry, for example, a subsidiary payload 14 and/or the associated service components, such as an energy source and the like.

In addition, as shown in Figure 6, it is possible to stack two such combinations of a primary and a secondary assembly 7, 7' on top of each other, coupled by the intermediate coupling 12. This may be a permanent coupling or a releasable coupling.

### List of reference numerals

- 1.: Carrier rocket
- 2.: Carrier rocket top
- 3.: Cargo space
- 4.: Main payload
- 5.: Upper coupling
- 6.: Adapter structure
- 7.: Assembly of connecting body and carrier body
- 8.: Connecting body
- 9.: Carrier body
- 10.: Lower coupling
- 11.: Stiffening element
- 12.: Coupling
- 13.: Subsidiary payload
- 14.: Propulsion
- 15.: Solar panel
- 16.: Surrounding shroud

## Claims

1. Adapter structure (6) for a spacecraft comprising a carrier rocket (1) with a narrowing top (2), wherein the adapter structure comprises at least one assembly (7) of a connecting body (8) for supporting a main payload (4) and a carrier body (9) for supporting at least one subsidiary payload (13), wherein the connecting body (8), at one end, comprises an engagement element which forms part of a releasable upper coupling (5) for connecting to the main payload (4), wherein the carrier body (9) is situated externally with respect to the connecting body (8) and is connected to the connecting body (8) at a position between said ends of the connecting body (8) **characterized in that** the at least one subsidiary payload has a total mass that is at least an order of magnitude smaller than the total mass of the main payload, and **in that** the connecting body (8), at an opposite end, comprises an engagement element which forms part of a releasable lower coupling (10) for connecting to the narrowing top (2) of the carrier rocket (1).

2. Adapter structure (6) according to Claim 1, wherein the carrier body (9) extends transversely to the axis of the carrier rocket (1), preferably at right angles to this axis.

3. Adapter structure (6) according to Claim 2, comprising at least one stiffening element, such as a stiffening plate (11) which extends parallel to a longitudinal direction of the carrier rocket (1), which stiffening element is connected to the carrier body (9) and the connecting body (8).

4. Adapter structure (6) according to one of the preceding claims, comprising at least two assemblies (7) of a connecting body (8) and a carrier body (9), wherein the connecting bodies of the assemblies are connected in series.

5. Adapter structure (6) according to Claim 4, wherein at least two of the connecting bodies (8) are connected to each other by means of a further releasable coupling (12).

6. Adapter structure (6) according to one of the preceding claims, wherein the connecting body (8) is cylindrical.

7. Adapter structure (6) according to one of the preceding claims, wherein at least one of the releasable upper coupling (5), the releasable lower coupling (10), and the further releasable coupling (12) comprises a so-called Marmon coupling.

8. Adapter structure (6) according to one of the preceding claims, wherein a releasable coupling comprises a shock absorber.

9. Adapter structure (6) according to one of the preceding claims, wherein the subsidiary payload (13) is releasably connected to the carrier body (9).

10. Adapter structure (6) according to one of the preceding claims, wherein the main payload (4) and the adapter structure (6) each comprise a circular engagement element, which engagement elements form part of the upper coupling (5) between the main payload and the adapter structure (6).

11. Adapter structure (6) according to any of the preceding claims, wherein a dimension of the main payload (4) is at least an order of magnitude larger than a dimension of the subsidiary payload (13), preferably each dimension of the main payload (4) is at least an order of magnitude larger than each dimension of the subsidiary payload (13).

12. Spacecraft, comprising a carrier rocket (1) with a narrowing top (2), a closed cargo space (3) on the carrier rocket, a main payload (4), at least one subsidiary payload (13), and an adapter structure (6) according to any of the preceding claims,
wherein the main payload (4), the at least one subsidiary payload, and the adapter structure (6) are situated in the cargo space, with the at least one subsidiary payload being supported on the carrier body (9) and situated externally with respect to the connecting body (8),
wherein the adapter structure is connected with an upper end of the connecting body to the main payload (4) by means of the releasable upper coupling (5), and wherein the adapter structure (6) is connected with a lower end of the connecting body (8) to the narrowing top (2) of the carrier rocket by means of the releasable lower coupling (10).

13. Spacecraft according to claim 12, wherein the narrowing top (2) of the carrier rocket (1) has a conical shape.

14. Spacecraft according to claim 12 or 13, wherein the cargo space is surrounded by a surrounding shroud (16) and the connecting body (8) has a maximum dimension transverse with respect to the longitudinal direction of the carrier rocket (1) in between 20% and 50% of the internal dimension of the shroud (16) transverse with respect to the longitudinal direction of the carrier rocket (1).

## Patentansprüche

1. Adapterstruktur (6) für ein Raumfahrzeug, die eine Trägerrakete (1) mit einem sich verschmälernden Oberteil (2) aufweist, wobei die Adapterstruktur wenigstens eine Anordnung (7) aus einem Verbindungskörper (8) zum Tragen einer Hauptnutzlast (4) und einem Trägerkörper (9) zum Tragen wenigstens einer Nebennutzlast (13) aufweist, wobei der Verbindungskörper (8) an einem Ende ein Eingriffselement aufweist, das Teil einer lösbaren oberen Kupplung (5) zum Verbinden mit der Hauptnutzlast (4) bildet, wobei der Trägerkörper (9) in Bezug auf den Verbindungskörper (8) außen liegt und an einer Position zwischen den genannten Enden des Verbindungskörpers (8) mit dem Verbindungskörper (8) verbunden ist, **dadurch gekennzeichnet, dass** die wenigstens eine Nebennutzlast eine Gesamtmasse hat, die wenigstens eine Größenordnung kleiner als die Gesamtmasse der Hauptnutzlast ist, und dadurch, dass der Verbindungskörper (8) an einem entgegengesetzten Ende ein Eingriffselement aufweist, das Teil einer auslösbaren unteren Kupplung (10) zum Verbinden mit dem sich verschmälernden Oberteil (2) der Trägerrakete (1) bildet.

2. Adapterstruktur (6) nach Anspruch 1, wobei der Trägerkörper (9) quer zur Achse der Trägerrakete (1), vorzugsweise im rechten Winkel zu dieser Achse, verläuft.

3. Adapterstruktur (6) nach Anspruch 2, die wenigstens ein Versteifungselement, wie etwa eine Versteifungsplatte (11), aufweist, das parallel zu einer Längsrichtung der Trägerrakete (1) verläuft, wobei das Versteifungselement mit dem Trägerkörper (9) und dem Verbindungskörper (8) verbunden ist.

4. Adapterstruktur (6) nach einem der vorhergehenden Ansprüche, die wenigstens zwei Anordnungen (7) aus einem Verbindungskörper (8) und einem Trägerkörper (9) aufweist, wobei die Verbindungskörper der Anordnungen in Reihe miteinander verbunden sind.

5. Adapterstruktur (6) nach Anspruch 4, wobei wenigstens zwei der Verbindungskörper (8) mithilfe einer weiteren lösbaren Kupplung (12) miteinander verbunden sind.

6. Adapterstruktur (6) nach einem der vorhergehenden Ansprüche, wobei der Verbindungskörper (8) zylindrisch ist.

7. Adapterstruktur (6) nach einem der vorhergehenden Ansprüche, wobei wenigstens eine von der lösbaren oberen Kupplung (5), der lösbaren unteren Kupplung (10) und der weiteren lösbaren Kupplung (12) eine sogenannte Marmon-Kupplung umfasst.

8. Adapterstruktur (6) nach einem der vorhergehenden Ansprüche, wobei eine lösbare Kupplung einen Stoßdämpfer aufweist.

9. Adapterstruktur (6) nach einem der vorhergehenden Ansprüche, wobei die Nebennutzlast (13) lösbar mit dem Trägerkörper (9) verbunden ist.

10. Adapterstruktur (6) nach einem der vorhergehenden Ansprüche, wobei die Hauptnutzlast (4) und die Adapterstruktur (6) jeweils ein kreisförmiges Eingriffselement aufweisen, wobei die Eingriffselemente Teil der oberen Kupplung (5) zwischen der Hauptnutzlast und der Adapterstruktur (6) bilden.

11. Adapterstruktur (6) nach einem der vorhergehenden Ansprüche, wobei eine Abmessung der Hauptnutzlast (4) wenigstens eine Größenordnung größer als eine Abmessung der Nebennutzlast (13) ist, vorzugsweise jede Abmessung der Hauptnutzlast (4) wenigstens eine Größenordnung größer als jede Abmessung der Nebennutzlast (13) ist.

12. Raumflugzeug, das eine Trägerrakete (1) mit einem sich verschmälernden Oberteil (2), einen geschlossenen Frachtraum (3) an der Trägerrakete, eine Hauptnutzlast (4), wenigstens eine Nebennutzlast (13) und eine Adapterstruktur (6) nach einem der vorhergehenden Ansprüche aufweist,
wobei sich die Hauptnutzlast (4), die wenigstens eine Nebennutzlast und die Adapterstruktur (6) in dem Frachtraum befinden, wobei die wenigstens eine Nebennutzlast am Trägerkörper (9) getragen wird und in Bezug auf den Verbindungskörper (8) außen liegt,
wobei die Adapterstruktur mittels der lösbaren oberen Kupplung (5) mit einem oberen Ende des Verbindungskörpers mit der Hauptnutzlast (4) verbunden ist, und wobei die Adapterstruktur (6) mittels der lösbaren unteren Kupplung (10) mit einem unteren Ende des Verbindungskörpers (8) mit dem sich verschmälernden Oberteil (2) der Trägerrakete verbunden ist.

13. Raumflugzeug nach Anspruch 12, wobei das sich verschmälernde Oberteil (2) der Trägerrakete (1) eine Kegelform hat.

14. Raumflugzeug nach Anspruch 12 oder 13, wobei der Frachtraum von einer umgebenden Umhüllung (16) umgeben ist und der Verbindungskörper (8) eine maximale in Bezug auf die Längsrichtung der Trägerrakete (1) quer verlaufende Abmessung zwischen 20 % und 50 % der inneren in Bezug auf die Längsrichtung der Trägerrakete (1) quer verlaufenden Abmessung der Umhüllung (16) hat.

## Revendications

1. Structure d'adaptateur (6) pour un engin spatial comprenant une fusée porteuse (1) ayant une partie supérieure se rétrécissant (2), la structure d'adaptateur comprenant au moins un ensemble (7) constitué d'un corps de liaison (8) pour supporter une charge utile principale (4) et d'un corps porteur (9) pour supporter au moins une charge utile subsidiaire (13), le corps de liaison (8), au niveau d'une première extrémité, comprenant un élément de mise en prise qui forme une partie d'un accouplement supérieur libérable (5) destiné à être relié à la charge utile principale (4), le corps porteur (9) étant situé à l'extérieur par rapport au corps de liaison (8) et relié au corps de liaison (8) au niveau d'une position située entre lesdites extrémités du corps de liaison (8), **caractérisée en ce que** la au moins une charge utile subsidiaire a une masse totale d'au moins un ordre de grandeur plus petite que la masse totale de la charge utile principale, et **en ce que** le corps de liaison (8), à une extrémité opposée, comprend un élément de mise en prise qui forme une partie d'un accouplement inférieur libérable (10) destiné à être relié à la partie supérieure se rétrécissant (2) de la fusée porteuse (1).

2. Structure d'adaptateur (6) selon la revendication 1, dans laquelle le corps porteur (9) s'étend transversalement à l'axe de la fusée porteuse (1), de préférence à angle droit par rapport à cet axe.

3. Structure d'adaptateur (6) selon la revendication 2, comprenant au moins un élément raidisseur, telle qu'une plaque raidisseuse (11) qui s'étend parallèlement à une direction longitudinale de la fusée porteuse (1), lequel élément raidisseur est relié au corps porteur (9) et au corps de liaison (8).

4. Structure d'adaptateur (6) selon l'une quelconque des revendications précédentes, comprenant au moins deux ensembles (7) constitués d'un corps de liaison (8) et d'un corps porteur (9), dans laquelle les corps de liaison des ensembles sont reliés en série.

5. Structure d'adaptateur (6) selon la revendication 4, dans laquelle au moins deux des corps de liaison (8) sont reliés l'un à l'autre par l'intermédiaire d'un autre accouplement libérable (12).

6. Structure d'adaptateur (6) selon l'une quelconque des revendications précédentes, dans laquelle le corps de liaison (8) est cylindrique.

7. Structure d'adaptateur (6) selon l'une quelconque des revendications précédentes, dans laquelle au moins un parmi l'accouplement supérieur libérable (5), l'accouplement inférieur libérable (10), et l'autre accouplement libérable (12) comprend ce qu'on appelle un accouplement Marmon.

8. Structure d'adaptateur (6) selon l'une quelconque des revendications précédentes, dans laquelle un accouplement libérable comprend un absorbeur de choc.

9. Structure d'adaptateur (6) selon l'une quelconque des revendications précédentes, dans laquelle la charge utile subsidiaire (13) est reliée de manière libérable au corps porteur (9).

10. Structure d'adaptateur (6) selon l'une quelconque des revendications précédentes, dans laquelle la charge utile principale (4) et la structure d'adaptateur (6) comprennent chacun un élément d'accouplement circulaire, lesquels éléments d'accouplement circulaire forment une partie de l'accouplement supérieur (5) entre la charge utile principale et la structure d'adaptateur (6).

11. Structure d'adaptateur (6) selon l'une quelconque des revendications précédentes, dans laquelle une dimension de la charge utile principale (4) est d'au moins un ordre de grandeur plus grande qu'une dimension de la charge utile subsidiaire (13), de préférence chaque dimension de la charge utile principale (4) est d'au moins un ordre de grandeur plus grande que chaque dimension de la charge utile subsidiaire (13).

12. Engin spatial comprenant une fusée porteuse (1) ayant une partie supérieure se rétrécissant (2), un espace de chargement fermé (3) situé sur la fusée porteuse, une charge utile principale (4), au moins une charge utile subsidiaire (13), et une structure d'adaptateur (6) selon l'une quelconque des revendications précédentes, dans lequel la charge utile principale (4), la au moins une charge utile subsidiaire, et la structure d'adaptateur (6) sont situées dans l'espace de chargement, la au moins une charge utile subsidiaire étant supportée sur le corps porteur (9) et située à l'extérieur par rapport au corps de liaison (8), la structure d'adaptateur étant reliée à l'aide d'une extrémité supérieure du corps de liaison à la charge utile principale (4) par l'intermédiaire de l'accouplement supérieur libérable (5), et dans lequel la structure d'adaptateur (6) est reliée à l'aide d'une extrémité inférieure du corps de liaison (8) à la partie supérieure se rétrécissant (2) de la fusée porteuse par l'intermédiaire de l'accouplement inférieur libérable (10).

13. Engin spatial selon la revendication 12, dans lequel la partie supérieure se rétrécissant (2) de la fusée porteuse (1) a une forme conique.

14. Engin spatial selon les revendications 12 ou 13, dans lequel l'espace de chargement est entouré par une enveloppe entourante (16) et le corps de liaison (8) a une dimension maximum transversale par rapport à la direction longitudinale de la fusée porteuse (1) située entre 20 % et 50 % de la dimension interne de l'enveloppe (16) transversale par rapport à la direction longitudinale de la fusée porteuse (1).
